(19) Europäisches Patentamt

European Patent Office

Office européen des brevets

(11) **EP 4 264 822 B1**

(12) **EUROPÄISCHE PATENTSCHRIFT**

(45) Veröffentlichungstag und Bekanntmachung des Hinweises auf die Patenterteilung:
**15.07.2026 Patentblatt 2026/29**

(21) Anmeldenummer: **21823857.4**

(22) Anmeldetag: **01.12.2021**

(51) Internationale Patentklassifikation (IPC):
**H02P 29/50** (2016.01)   **H02P 27/08** (2006.01)

(52) Gemeinsame Patentklassifikation (CPC):
**H02P 29/50; H02P 27/08**

(86) Internationale Anmeldenummer:
**PCT/EP2021/083746**

(87) Internationale Veröffentlichungsnummer:
**WO 2022/128471 (23.06.2022 Gazette 2022/25)**

(54) **VERFAHREN UND VORRICHTUNG ZUM BETREIBEN EINER ELEKTRISCHEN MASCHINE**

METHOD AND DEVICE FOR OPERATING AN ELECTRIC MACHINE

PROCÉDÉ ET DISPOSITIF POUR FAIRE FONCTIONNER UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2020 DE 102020215973**

(43) Veröffentlichungstag der Anmeldung:
**25.10.2023 Patentblatt 2023/43**

(73) Patentinhaber: **Robert Bosch GmbH**
**70442 Stuttgart (DE)**

(72) Erfinder:
• **PAULUS, Sebastian**
**73728 Esslingen Am Neckar (DE)**
• **HIRSCH, Michele**
**73730 Esslingen (DE)**
• **ZELTWANGER, Thomas**
**74379 Ingersheim (DE)**

(56) Entgegenhaltungen:
**CN-B- 109 347 387    US-A1- 2014 265 961**

**Beschreibung**

Die vorliegende Erfindung betrifft ein Verfahren zum Betreiben einer elektrischen Maschine sowie einer Vorrichtung zum Betreiben einer elektrischen Maschine. Insbesondere kann die Erfindung ein Verfahren und eine Vorrichtung zum Regeln der elektrischen Maschine betreffen.

Stand der Technik

Die Druckschriften US 2014/265961 A1 und CN 109 347 387 B offenbaren Verfahren und Vorrichtungen zum Betreiben einer elektrischen Maschine. Um beim Betreiben einer elektrischen Maschine störende Geräusche oder Drehmomentripple zu verringern, können sogenannte Stromharmonische eingeprägt werden (im Englischen auch "Current Shaping" oder "Resonant Control" genannt). Dabei handelt es sich um Harmonische (d.h. Oberwellen), welche beim Betreiben der elektrischen Maschine auftreten.

Hierzu wird mindestens eine harmonische Ordnungen (facHrmc) zusätzlich zu der Grundwelle eingeprägt. Zum Beispiel werden oft im feldorientierten Koordinatensystem die sechsten Harmonischen (+6 und -6) eingeprägt, d.h. facHrmc = 6. Im Phasen-Koordinatensystem entsprechen diese genannten Harmonischen einer -5-ten und +7-ten Ordnung. Denn allgemein gilt, dass die harmonischen Frequenzen in feldorientierten Koordinaten gegeben sind durch:

$$\mathrm{Frq\_dq\_Harmonic\_Neg} = -\mathrm{facHrmc}* \mathrm{Frq\_Elektrisch} = -6*\mathrm{Frq\_Elektrisch},$$

$$\mathrm{Frq\_dq\_Harmonic\_Pos} = \mathrm{facHrmc}* \mathrm{Frq\_Elektrisch} = 6*\mathrm{Frq\_Elektrisch}.$$

Entsprechende harmonische Frequenzen in Phasen-Koordinaten sind gegeben durch:

$$\mathrm{Frq\_AlphaBeta\_Harmonic\_Neg} = - (\mathrm{facHrmc}-1)* \mathrm{Frq\_Elektrisch} = -5*\mathrm{Frq\_Elektrisch},$$

$$\mathrm{Frq\_AlphaBeta\_Harmonic\_Pos}= (\mathrm{facHrmc}+1)* \mathrm{Frq\_Elektrisch} = 7*\mathrm{Frq\_Elektrisch}.$$

Die harmonischen Ströme können mit einer harmonischen Spannungssteuerung oder einer harmonischen Stromregelung eingestellt werden.

Ein beispielhaftes Verfahren zur Optimierung von einer Dritte-Harmonische-Strominjektion in einer mehrphasigen Maschine ist aus der DE 10 2011 003 352 A1 bekannt.

Zum Ansteuern einer elektrischen Maschine werden üblicherweise für jede Periode eines Pulsweitenmodulations (PWM)-Verfahrens drei- oder mehrphasige Sollspannungen (Stellgrößen) berechnet. Als Modulationsverfahren werden drei- oder mehrphasige Sinus-PWM, Raumzeigermodulation (englisch: "space vector pulse width modulation", SVPWM)-Flat-Top oder Ähnliches eingesetzt.

In Pandit et al., "PR controller implementation using double update mode digital PWM for grid connected inverter", 2014, wird eine Erweiterung der PWM-Methode um die Funktion "Double Update" beschrieben. Das Verfahren wird verwendet, um die Dynamik einer Regelung von transienten Größen mit einer PWM-Stellgröße zu verbessern. Mit der Methode ergibt sich beispielsweise ein geringerer Delay zu der gestellten Spannung, da die Spannung öfter gestellt werden kann. Der geringe Delay erlaubt der Regelung eine höhere Dynamik.

Bei einem normaler Pulsweitenmodulationsverfahren (also mit "Single Update") wird genau ein Stellsignal für jede Periode des Pulsweitenmodulationsverfahrens berechnet. Daraus ergibt sich je nach PWM-Variante (links, rechts oder zentriert ausgerichtet) eine Schaltzeit für den Ein- und eine Schaltzeit für den Ausschaltvorgang.

Offenbarung der Erfindung

Die vorliegende Erfindung betrifft ein Verfahren und eine Vorrichtung zum Betreiben einer elektrischen Maschine, ein Computerprogrammprodukt und ein nichtflüchtiges, computerlesbares Speichermedium mit den Merkmalen der unabhängigen Patentansprüche.

Bevorzugte Ausführungsformen sind Gegenstand der jeweiligen Unteransprüche.

Gemäß einem ersten Aspekt betrifft die Erfindung demnach ein Verfahren zum Betreiben einer elektrischen Maschine. Eine Oberwellen-Stellgröße bezüglich einer beim Bestromen der elektrischen Maschine auftretenden Oberwelle einer vorgegebenen Frequenz wird ermittelt. Die elektrische Maschine wird unter Verwendung der ermittelten Oberwellen-Stellgröße mittels eines Pulsweitenmodulationsverfahrens bestromt. Für jede Periode des Pulsweitenmodulationsverfahrens wird die Oberwellen-Stellgröße sowohl für einen Einschaltvorgang als auch für einen Ausschaltvorgang ermittelt.

Gemäß einem zweiten Aspekt betrifft die Erfindung demnach eine Vorrichtung zum Regeln einer elektrischen Maschine. Eine Recheneinrichtung ermittelt eine Oberwellen-Stellgröße bezüglich einer beim Bestromen der elektrischen Maschine auftretenden Oberwelle einer vorgegebenen Frequenz. Eine Ansteuereinrichtung bestromt die elektrische Maschine unter Verwendung der ermittelten Oberwellen-Stellgröße mittels eines Pulsweitenmodulationsverfahrens. Die Vorrichtung ist dazu ausgebildet, für jede Periode des Pulsweitenmodulationsverfahrens die Oberwellen-Stellgröße sowohl für einen Einschaltvorgang als auch für einen Ausschaltvorgang zu ermitteln.

Gemäß einem dritten Aspekt betrifft die Erfindung demnach ein Computerprogrammprodukt mit ausführbarem Programmcode, dazu ausgebildet, beim Ausführen auf einem Computer das erfindungsgemäße Verfahren zum Betreiben der elektrischen Maschine auszuführen.

Gemäß einem vierten Aspekt betrifft die Erfindung demnach ein nichtflüchtiges, computerlesbares Speichermedium mit ausführbarem Programmcode, dazu ausgebildet, beim Ausführen auf einem Computer das Verfahren zum Betreiben der elektrischen Maschine auszuführen.

Vorteile der Erfindung

Erfindungsgemäß werden Oberwellen injiziert, wobei ein Pulsweitenmodulationsverfahren mit "Double Update" eingesetzt wird. Demnach werden zwei Oberwellen-Stellgrößen bzw. Oberwellen-Stellsignale pro Periode des Pulsweitenmodulationsverfahrens berechnet. Eine Oberwellen-Stellgröße wird für die Schaltzeit des Einschaltvorgangs berechnet und eine weitere Oberwellen-Stellgröße für die Schaltzeit des Ausschaltvorgangs. Demnach werden die Ein- und Ausschaltzeiten unabhängig voneinander mittels zweier unabhängig berechneter Oberwellen-Stellgrößen bestimmt. Dadurch können die Modulation bzw. die Spannungsstellung der harmonischen Frequenz verbessert werden.

Die ermittelten Oberwellen-Stellgrößen beeinflussen somit den jeweiligen Ein- und Ausschaltvorgang, werden also beim Bestromen der elektrischen Maschine angewendet.

Die "Double Update"-Funktion für das Pulsweitenmodulationsverfahren wird somit speziell für die harmonische Frequenz verwendet. Die "Double Update"-Funktion verringert dabei nicht nur den Delay zwischen der berechneten Soll-Spannung und der Ist-Spannung, sondern auch die maximal mögliche Frequenz einer Soll-Spannung, die mit dem Pulsweitenmodulationsverfahren erzeugt werden kann. Die maximale Drehzahl und die maximale elektrische Frequenz, bei der eine harmonische Spannung eingeprägt werden kann, werden dadurch verdoppelt.

Die Erfindung kann somit bei einer harmonischen Strom-Regelung und bei einer harmonischen Spannungs-Steuerung (also keiner Regelung) eingesetzt werden, um höhere harmonische Frequenzen der harmonischen Spannungen und Ströme zu ermöglichen.

Unter einer "Oberwellen-Stellgröße" kann eine Stellgröße für eine einzuspeisende Oberwelle verstanden werden (etwa an die elektrische Maschine angelegte Sollspannung).

Die feste oder variable Frequenz des Pulsweitenmodulationsverfahrens kann anhand der eingesetzten Hardware, insbesondere von Halbleitern und Mikrokontrollern eines Wechselrichters, anhand der Anforderungen an die Effizienz, anhand des Bauteilschutzes usw. bestimmt werden. Durch Injektion von Harmonischen mit "Single-Update" ist die theoretisch maximale Frequenz der harmonischen Oberwelle nach dem Nyquist-Theorem auf die halbe Frequenz des Pulsweitenmodulationsverfahrens begrenzt. Tatsächlich werden noch mehr Abtastpunkte (facFrqModFrqPwm) für eine Sinus-Welle benötigt, um eine stabile harmonische Spannung einzustellen:

$$\mathrm{Frq\_ModulationMax} = \mathrm{FrqPWM} \,/\, \mathrm{facFrqModFrqPwm}.$$

Damit ist die maximale elektrische Frequenz, bei der die harmonische Frequenz eingestellt werden kann, gegeben durch:

Frq_elektrisch_HarmonicMax = Frq_ModulationMax / (facHrmc+1) = FrqPWM / (facFrqModFrqPwm * (facHrmc+1)).

Beispielsweise ist bei einer PWM-Frequenz von 10 kHz und bei einem benötigten Faktor facFrqMod-FrqPwm = 6 die maximale elektrische Frequenz, bei der die siebte harmonische Frequenz eingeprägt werden, gegeben durch:

$$\mathrm{Frq\_elektrisch\_HarmonicMax} = 10000 \,/\, (\,6 * 7\,) = 238{,}0952 \ \mathrm{Hz}.$$

Damit ist der Drehzahlbereich der harmonischen Injektion bei gegebener PWM-Frequenz begrenzt. Durch Verwendung von "Double-Update" kann der Drehzahlbereich trotz begrenzter PWM-Frequenz erweitert werden.

Gemäß einer Weiterbildung handelt es sich bei dem Verfahren zum Betreiben der elektrischen Maschine um ein Verfahren zum Regeln der elektrischen Maschine. Demnach wird eine Oberwellen-Rückführgröße ermittelt, welche eine Istgröße der beim Bestromen der elektrischen Maschine auftretenden Oberwelle umfasst. Weiter wird eine Oberwellen-Regelabweichung unter Verwendung der ermittelten Oberwellen-Rückführgröße und einer vorgegebenen Führungsgröße bezüglich der Oberwelle ermittelt. Die Oberwellen-Stellgröße wird unter Verwendung der ermittelten Oberwellen-Regelabweichung ermittelt. Die Erfindung ist somit für Regelverfahren einsetzbar.

Gemäß einer Weiterbildung des Verfahrens zum Betreiben der elektrischen Maschine umfasst die Oberwellen-Rückführgröße die Istgröße der Oberwelle in einem feldorientierten System. Die Oberwellen-Rückführgröße wird hierbei in eine Oberwellen-Gleichrückführgröße in einem oberwellenorientierten System transformiert. Die Oberwellen-Regelabweichung wird als eine Differenz der Oberwellen-Gleichrückführgröße und der vorgegebenen Führungsgröße ermittelt. Das Verfahren kann somit eine Eingangstransformation umfassen.

Gemäß einer Weiterbildung des Verfahrens zum Betreiben der elektrischen Maschine wird zum Ermitteln der Oberwellen-Stellgröße unter Verwendung der ermittelten

Oberwellen-Regelabweichung eine Oberwellen-Gleichstellgröße in dem oberwellenorientierten System ermittelt, wobei die Oberwellen-Gleichstellgröße in die Oberwellen-Stellgröße in dem feldorientierten System rücktransformiert wird. Das Verfahren kann somit eine Ausgangstransformation umfassen.

Gemäß einer Weiterbildung des Verfahrens zum Betreiben der elektrischen Maschine wird weiter mittels einer Grundwellenregelung eine Grundwellen-Stellgröße ermittelt, wobei durch Überlagern der Grundwellen-Stellgröße mit der Oberwellen-Stellgröße eine Maschinen-Stellgröße ermittelt wird, und wobei das Bestromen der elektrischen Maschine unter Verwendung der ermittelten Maschinen-Stellgröße erfolgt. Die Maschinen-Stellgröße kann insbesondere eine Spannung sein. Im Zeitbereich kann die Maschinen-Stellgröße eine Wechselgröße, eine Grundwelle, und mindestens eine weitere überlagerte Wechselgröße, d.h. eine Oberwelle umfassen.

Gemäß einer Weiterbildung der Vorrichtung zum Regeln der elektrischen Maschine ist die Recheneinrichtung weiter dazu ausgebildet, eine Oberwellen-Rückführgröße zu ermitteln, welche eine Istgröße der beim Bestromen der elektrischen Maschine auftretenden Oberwelle umfasst. Die Recheneinrichtung ermittelt weiter eine Oberwellen-Regelabweichung unter Verwendung der ermittelten Oberwellen-Rückführgröße und einer vorgegebenen Führungsgröße bezüglich der Oberwelle. Die Recheneinrichtung ermittelt die Oberwellen-Stellgröße unter Verwendung der ermittelten Oberwellen-Regelabweichung.

Gemäß einer Weiterbildung der Vorrichtung zum Regeln der elektrischen Maschine umfasst die Oberwellen-Rückführgröße die Istgröße der Oberwelle in einem feldorientierten System. Die Recheneinrichtung transformiert die Oberwellen-Rückführgröße in eine Oberwellen-Gleichrückführgröße in einem oberwellenorientierten System und ermittelt die Oberwellen-Regelabweichung als eine Differenz der Oberwellen-Gleichrückführgröße und der vorgegebenen Führungsgröße.

Kurze Beschreibung der Zeichnungen

Es zeigen:

Figur 1   ein schematisches Blockdiagramm einer elektrischen Maschine sowie einer Vorrichtung zum Betreiben der elektrischen Maschine gemäß einer Ausführungsform der Erfindung;

Figur 2   ein schematisches Diagramm zur Erläuterung eines Verfahrens zum Betreiben einer elektrischen Maschine gemäß einer Ausführungsform der Erfindung;

Figur 3   ein Diagramm zur Erläuterung einer Pulsweitenmodulation mit Single-Update; und

Figur 4   ein Diagramm zur Erläuterung einer Pulsweitenmodulation mit Double-Update;

Figur 5   ein schematisches Blockdiagramm eines Computerprogrammprodukts gemäß einer Ausführungsform der Erfindung; und

Figur 6   ein schematisches Blockdiagramm eines nichtflüchtigen, computerlesbaren Speichermediums gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

Beschreibung der Ausführungsbeispiele

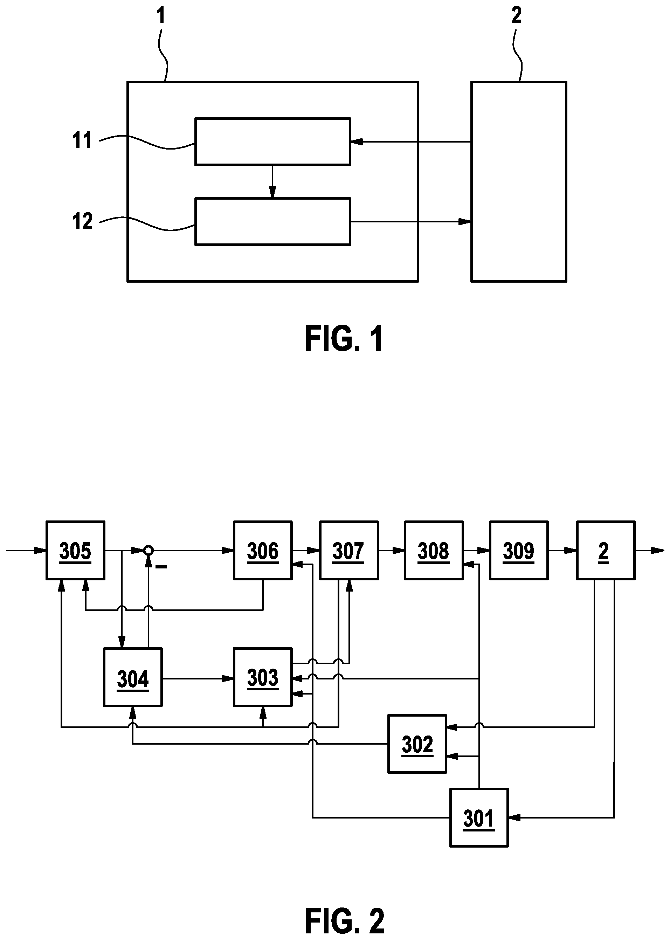

Figur 1 zeigt ein schematisches Blockdiagramm einer elektrischen Maschine 2 sowie einer Vorrichtung 1 zum Betreiben der elektrischen Maschine 2. Die Vorrichtung 1 umfasst eine Recheneinrichtung 11, welche eine Oberwellen-Stellgröße bezüglich einer beim Bestromen der elektrischen Maschine 2 auftretenden Oberwelle einer vorgegebenen Frequenz ermittelt.

Die Ansteuereinrichtung 11 kann insbesondere ein Oberwellenregler sein. Die Recheneinrichtung 11 kann hierzu eine Oberwellen-Rückführgröße ermitteln, welche eine Istgröße der beim Bestromen der elektrischen Maschine 2 auftretenden Oberwelle umfasst. Die Recheneinrichtung 11 ermittelt weiter eine Oberwellen-Regelabweichung unter Verwendung der ermittelten Oberwellen-Rückführgröße und einer vorgegebenen Führungsgröße bezüglich der Oberwelle. Die Recheneinrichtung 11 ermittelt die Oberwellen-Stellgröße unter Verwendung der ermittelten Oberwellen-Regelabweichung.

Die Oberwellen-Rückführgröße kann die Istgröße der Oberwelle in einem feldorientierten System umfassen. Die Recheneinrichtung 11 transformiert die Oberwellen-Rückführgröße in eine Oberwellen-Gleichrückführgröße in einem oberwellenorientierten System und ermittelt die Oberwellen-Regelabweichung als eine Differenz der Oberwellen-Gleichrückführgröße und der vorgegebenen Führungsgröße.

Zum Ermitteln der Oberwellen-Stellgröße unter Verwendung der ermittelten Oberwellen-Regelabweichung kann die Recheneinrichtung 11 eine Oberwellen-Gleichstellgröße in dem oberwellenorientierten System ermittelt, wobei die Oberwellen-Gleichstellgröße in die Oberwellen-Stellgröße in dem feldorientierten System rücktransformiert wird.

Weiter kann die Recheneinrichtung 11 mittels einer Grundwellenregelung eine Grundwellen-Stellgröße ermitteln, wobei durch Überlagern der Grundwellen-Stellgröße mit der Oberwellen-Stellgröße eine Maschinen-Stellgröße ermittelt wird.

Weiter umfasst die Vorrichtung 1 eine Ansteuereinrichtung 12, welche die elektrische Maschine unter Verwendung der ermittelten Oberwellen-Stellgröße mittels eines Pulsweitenmodulationsverfahrens bestromt. Das Bestromen der elektrischen Maschine 2 kann unter Verwendung der ermittelten Maschinen-Stellgröße erfolgen. Bei dem Pulsweitenmodulationsverfahren kommt eine "Double-Update"-Funktion zum Einsatz, d. h. für jede Periode des Pulsweitenmodulationsverfahrens wird die Oberwellen-Stellgröße mindestens zweimal berechnet, d. h. sowohl für einen Einschaltvorgang (steigende Flanke) als auch für einen Ausschaltvorgang (fallende Flanke).

Figur 2 zeigt ein schematisches Diagramm zur Erläuterung eines Verfahrens zum Betreiben einer elektrischen Maschine 2, insbesondere mit einer oben beschriebenen Vorrichtung 1.

Ein Rotorwinkel $\varphi_{sens}$ wird gemessen, welcher einer Rotorlage eines Rotors der elektrischen Maschine 2 entspricht. Eine Berechnungseinheit 302 berechnet anhand des Rotorwinkels $\varphi_{sens}$ einen magnetischer-Fluss-Winkel $\varphi_{flx}$, welcher einer Eingangstransformation 302 und einer Ausgangstransformation 308 bereitgestellt wird, sowie eine Drehrate $\omega$, welche einer Stromregelung 306 bereitgestellt wird.

Weiter wird eine Maschinen-Rückführgröße Iabc (umfassend eine Oberwellen-Rückführgröße) der elektrischen Maschine 2 im Zeitbereich ermittelt und mittels der Eingangstransformation 302 in eine Rückführgröße Idq in einem feldorientierten System transformiert, wobei der magnetischer-Fluss-Winkel $\varphi_{flx}$ berücksichtigt wird. Die Rückführgröße Idq wird einem Filter 304 bereitgestellt.

Eine Einrichtung 305 ermittelt anhand einer Drehmoment-Stellgröße $T_{EM}{}^*$ eine Gleichführungsgröße Idq*. Das Filter 304 erzeugt eine Rückführgröße ohne den Anteil der Grundwelle $Idq_{WoFung}$, welche einem Oberwellenregler 303 bereitgestellt wird, sowie eine Regelungs-Rückführgröße $Idq_{Ctrl}$. Die Regelungs-Rückführgröße $Idq_{Ctrl}$ wird von der Gleichführungsgröße Idq* subtrahiert, um eine Regelabweichung zu erhalten, welche der Stromregelung 306 zugeführt wird. Anhand der Regelabweichung und der Drehrate $\omega$ berechnet die Stromregelung 306 eine Grundwellen-Gleichstellgröße $Udq_{Fund}{}^*$, welche einer Stellgrößen-Einrichtung 307 zugeführt wird.

Der Oberwellenregler 303 erzeugt eine Oberwellen-Stellgröße $Udq_{Hrmc}{}^*$ bzgl. eines Anteils der Oberwellen (Harmonischen), welche ebenfalls der Stellgrößen-Einrichtung 307 zugeführt wird. Die Stellgrößen-Einrichtung 307 erzeugt eine Stellgröße $Udq_{Lim}$ durch Überlagern der Grundwellen-Gleichstellgröße $Udq_{Fund}{}^*$ und der Oberwellen-Stellgröße $Udq_{Hrmc}{}^*$. Die Stellgröße $Udq_{Lim}$ wird der Ausgangstransformation 308 bereitgestellt. Die Stromregelung 306 gibt einen Anteil der Fundamentalwelle $uResv_{Funda}$ und die Stellgrößen-Einrichtung 307 gibt einen Anteil $uResv_{Hrmc}$ der Oberwellen an die Einrichtung 305 aus.

Die Ausgangstransformation 308 erzeugt anhand der Stellgröße $Udq_{Lim}$ und unter Berücksichtigung des magnetischer-Fluss-Winkels $\varphi_{flx}$ eine Maschinen-Stellgröße Uabc* im Zeitbereich. Diese wird einem Wechselrichter (Inverter) 309 bereitgestellt, welcher eine Phasenspannung Uabc erzeugt, anhand welcher mindestens eine Wicklung der elektrischen Maschine 2 bestromt wird.

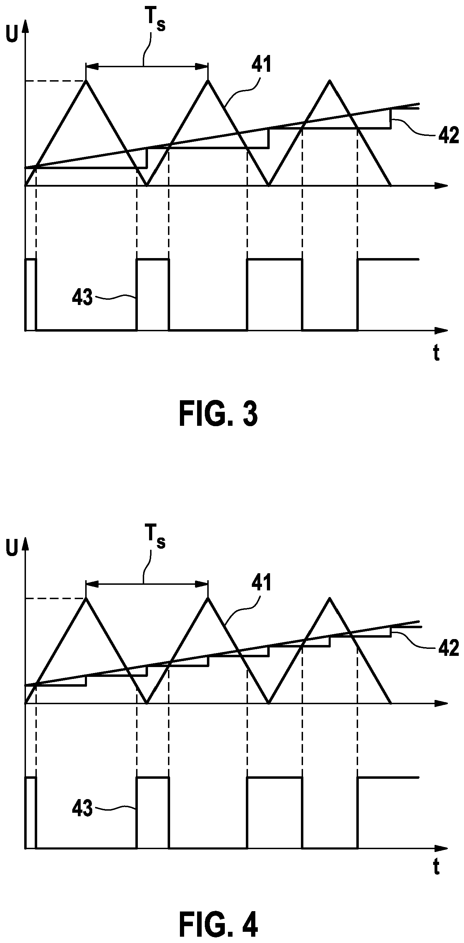

Figur 3 zeigt ein Diagramm zur Erläuterung einer Pulsweitenmodulation mit Single-Update, wobei die Spannung U als Funktion der Zeit aufgetragen ist. Demnach werden für jeden Puls 43, d.h. für jede Periode des Pulsweitenmodulationsverfahrens anhand von Schnittpunkten einer Vergleichsspannung 41 (mit Periodendauer $T_s$) und eines Rechenrasters 42 Einschalt- und Ausschaltzeitpunkte bestimmt, d.h. die steigenden und fallenden Flanken der Pulse 43. Die Oberwellen-Stellgröße wird somit einmal pro Puls bestimmt.

Figur 4 zeigt ein Diagramm zur Erläuterung einer Pulsweitenmodulation mit Double-Update. Das Rechenraster 42 ist hier derart gewählt, dass für jede Periode des Pulsweitenmodulationsverfahrens die Oberwellen-Stellgröße sowohl für den Einschaltvorgang als auch für den Ausschaltvorgang bestimmt wird.

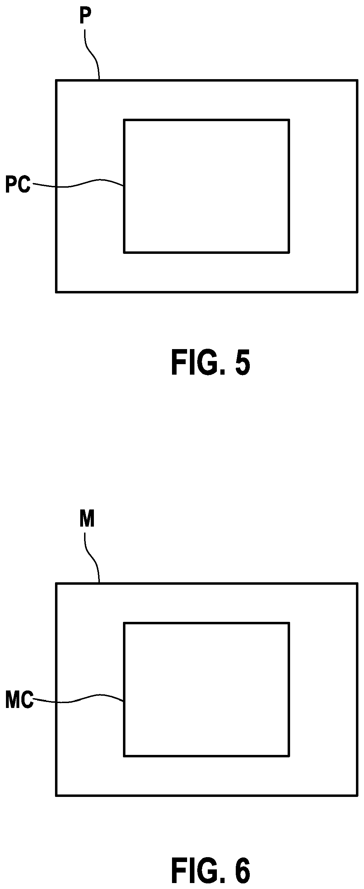

Figur 5 zeigt ein schematisches Blockdiagramm eines Computerprogrammprodukts P mit ausführbarem Programmcode PC. Der ausführbare Programmcode PC ist dazu ausgebildet, beim Ausführen auf einem Computer das erfindungsgemäße Verfahren durchzuführen.

Figur 6 zeigt ein schematisches Blockdiagramm eines nicht-flüchtigen, computerlesbaren Speichermediums M mit ausführbarem Programmcode MC, dazu ausgebildet, beim Ausführen auf einem Computer das erfindungsgemäße Verfahren durchzuführen.

## Patentansprüche

1. Verfahren zum Betreiben einer elektrischen Maschine (2), mit den Schritten:

   Ermitteln einer Oberwellen-Stellgröße bezüglich einer beim Bestromen der elektrischen Maschine (2) auftretenden Oberwelle einer vorgegebenen Frequenz; und
   Bestromen der elektrischen Maschine (2) unter Verwendung der ermittelten Oberwellen-Stellgröße mittels eines Pulsweitenmodulationsverfahrens;
   **dadurch gekennzeichnet, dass** für jede Periode des Pulsweitenmodulationsverfahrens eine Oberwellen-Stellgröße sowohl für einen Einschaltvorgang als auch eine weitere Oberwellen-Stellgröße für einen Ausschaltvorgang ermittelt wird,
   wonach zwei Oberwellen-Stellgrößen pro Periode des Pulsweitenmodulationsverfahrens berechnet werden, eine Oberwellen-Stellgröße für die Schaltzeit des Einschaltvorgangs und eine weitere Oberwellen-Stellgröße für die Schaltzeit des Ausschaltvorgangs.

2. Verfahren nach Anspruch 1, weiter mit den Schritten:

   Ermitteln einer Oberwellen-Rückführgröße, welche eine Istgröße der beim Bestromen der elektrischen Maschine (2) auftretenden Oberwelle umfasst; und
   Ermitteln einer Oberwellen-Regelabweichung unter Verwendung der ermittelten Oberwellen-Rückführgröße und einer vorgegebenen Führungsgröße bezüglich der Oberwelle,
   wobei eine Oberwellen-Stellgröße unter Verwendung der ermittelten Oberwellen-Regelabweichung ermittelt wird.

3. Verfahren nach Anspruch 2,

   wobei die Oberwellen-Rückführgröße die Istgröße der Oberwelle in einem feldorientierten System umfasst;
   wobei die Oberwellen-Rückführgröße in eine Oberwellen-Gleichrückführgröße in einem oberwellenorientierten System transformiert wird; und
   wobei die Oberwellen-Regelabweichung als eine Differenz der Oberwellen-Gleichrückführgröße und der vorgegebenen Führungsgröße ermittelt wird.

4. Verfahren nach Anspruch 3, wobei zum Ermitteln einer Oberwellen-Stellgröße unter Verwendung der ermittelten Oberwellen-Regelabweichung eine Oberwellen-Gleichstellgröße in dem oberwellenorientierten System ermittelt wird, und wobei die Oberwellen-Gleichstellgröße in die Oberwellen-Stellgröße in dem feldorientierten System rücktransformiert wird.

5. Verfahren nach einem der vorangehenden Ansprüche, wobei weiter mittels einer Grundwellenregelung eine Grundwellen-Stellgröße ermittelt wird, wobei durch Überlagern der Grundwellen-Stellgröße mit einer Oberwellen-Stellgröße eine Maschinen-Stellgröße ermittelt wird, und wobei das Bestromen der elektrischen Maschine (2) unter Verwendung der ermittelten Maschinen-Stellgröße erfolgt.

6. Vorrichtung (1) zum Betreiben einer elektrischen Maschine (2), mit:

   einer Recheneinrichtung (11), welche dazu ausgebildet ist, eine Oberwellen-Stellgröße bezüglich einer beim Bestromen der elektrischen Maschine (2) auftretenden Oberwelle einer vorgegebenen Frequenz zu ermitteln;

und

einer Ansteuereinrichtung (12), welche dazu ausgebildet ist, die elektrische Maschine (2) unter Verwendung der ermittelten Oberwellen-Stellgröße mittels eines Pulsweitenmodulationsverfahrens zu bestromen; **dadurch gekennzeichnet, dass** die Vorrichtung (1) dazu ausgebildet ist, für jede Periode des Pulsweitenmodulationsverfahrens eine Oberwellen-Stellgröße sowohl für einen Einschaltvorgang als auch eine weitere Oberwellen-Stellgröße für einen Ausschaltvorgang zu ermitteln, wonach zwei Oberwellen-Stellgrößen pro Periode des Pulsweitenmodulationsverfahrens berechnet werden, eine Oberwellen-Stellgröße für die Schaltzeit des Einschaltvorgangs und eine weitere Oberwellen-Stellgröße für die Schaltzeit des Ausschaltvorgangs.

7. Vorrichtung (1) nach Anspruch 6, wobei die Recheneinrichtung (11) weiter dazu ausgebildet,

- eine Oberwellen-Rückführgröße zu ermitteln, welche eine Istgröße der beim Bestromen der elektrischen Maschine (2) auftretenden Oberwelle umfasst;
- eine Oberwellen-Regelabweichung unter Verwendung der ermittelten Oberwellen-Rückführgröße und einer vorgegebenen Führungsgröße bezüglich der Oberwelle zu ermitteln; und
- eine Oberwellen-Stellgröße unter Verwendung der ermittelten Oberwellen-Regelabweichung zu ermitteln.

8. Vorrichtung (1) nach Anspruch 7, wobei die Oberwellen-Rückführgröße die Istgröße der Oberwelle in einem feldorientierten System umfasst; und
wobei die Recheneinrichtung (11) weiter dazu ausgebildet ist,

- die Oberwellen-Rückführgröße in eine Oberwellen-Gleichrückführgröße in einem oberwellenorientierten System zu transformieren, und
- die Oberwellen-Regelabweichung als eine Differenz der Oberwellen-Gleichrückführgröße und der vorgegebenen Führungsgröße zu ermitteln.

9. Computerprogrammprodukt (P) mit ausführbarem Programmcode (PC), dazu ausgebildet, beim Ausführen auf einem Computer das Verfahren gemäß einem der Ansprüche 1 bis 5 auszuführen.

10. Nichtflüchtiges, computerlesbares Speichermedium (M) mit ausführbarem Programmcode (MC), dazu ausgebildet, beim Ausführen auf einem Computer das Verfahren gemäß einem der Ansprüche 1 bis 5 auszuführen.

**Claims**

1. Method for operating an electric machine (2), having the steps of:

determining a harmonic manipulated variable with respect to a harmonic of a predefined frequency occurring when the electric machine (2) is energized; and
energizing the electric machine (2) using the determined harmonic manipulated variable by means of a pulse-width modulation method;
**characterized in that** for each period of the pulse-width modulation method, a harmonic manipulated variable is determined for a switch-on operation and a further harmonic manipulated variable is determined for a switch-off operation,
after which two harmonic manipulated variables per period of the pulse-width modulation method are calculated, a harmonic manipulated variable for the switching time of the switch-on operation and a further harmonic manipulated variable for the switching time of the switch-off operation.

2. Method according to Claim 1, further having the steps of:

determining a harmonic feedback variable which comprises an actual value of the harmonic occurring when the electric machine (2) is energized; and
determining a harmonic control deviation using the determined harmonic feedback variable and a predefined reference variable with respect to the harmonic,
wherein a harmonic manipulated variable is determined using the determined harmonic control deviation.

3. Method according to Claim 2,

wherein the harmonic feedback variable comprises the actual value of the harmonic in a field-oriented system; wherein the harmonic feedback variable is transformed into a harmonic DC feedback variable in a harmonic-oriented system; and wherein the harmonic control deviation is determined as a difference between the harmonic DC feedback variable and the predefined reference variable.

4. Method according to Claim 3, wherein in order to determine a harmonic manipulated variable using the determined harmonic control deviation, a harmonic DC manipulated variable in the harmonic-oriented system is determined, and wherein the harmonic DC manipulated variable is transformed back into the harmonic manipulated variable in the field-oriented system.

5. Method according to one of the preceding claims, wherein furthermore a fundamental wave manipulated variable is determined by means of fundamental wave control, wherein a machine manipulated variable is determined by overlapping the fundamental wave manipulated variable with a harmonic manipulated variable, and wherein the electric machine (2) is energized using the determined machine manipulated variable.

6. Apparatus (1) for operating an electric machine (2), having:

a computing device (11) which is designed to determine a harmonic manipulated variable with respect to a harmonic of a predefined frequency occurring when the electric machine (2) is energized; and an actuation device (12) which is designed to energize the electric machine (2) using the determined harmonic manipulated variable by means of a pulse-width modulation method; **characterized in that** the apparatus (1) is designed to determine, for each period of the pulse-width modulation method, a harmonic manipulated variable for a switch-on operation and a further harmonic manipulated variable for a switch-off operation, after which two harmonic manipulated variables per period of the pulse-width modulation method are calculated, a harmonic manipulated variable for the switching time of the switch-on operation and a further harmonic manipulated variable for the switching time of the switch-off operation.

7. Apparatus (1) according to Claim 6, wherein the computing device (11) is further designed to

- determine a harmonic feedback variable which comprises an actual value of the harmonic occurring when the electric machine (2) is energized;
- determine a harmonic control deviation using the determined harmonic feedback variable and a predefined reference variable with respect to the harmonic; and
- determine a harmonic manipulated variable using the determined harmonic control deviation.

8. Apparatus (1) according to Claim 7, wherein the harmonic feedback variable comprises the actual value of the harmonic in a field-oriented system; and wherein the computing device (11) is further designed to

- transform the harmonic feedback variable into a harmonic DC feedback variable in a harmonic-oriented system, and
- determine the harmonic control deviation as a difference between the harmonic DC feedback variable and the predefined reference variable.

9. Computer program product (P) having executable program code (PC), designed to perform the method according to one of Claims 1 to 5 when executed on a computer.

10. Non-volatile, computer-readable storage medium (M) having executable program code (MC), designed to perform the method according to one of Claims 1 to 5 when executed on a computer.

**Revendications**

1. Procédé pour le fonctionnement d'une machine électrique (2), comprenant les étapes consistant à :

déterminer une grandeur de réglage d'harmoniques par rapport à un harmonique d'une fréquence prédéfinie qui se produit lorsque la machine électrique (2) est alimentée ; et

alimenter la machine électrique (2) en utilisant la grandeur de réglage d'harmoniques déterminée au moyen d'un procédé de modulation de largeur d'impulsion ;

**caractérisé en ce que**, pour chaque période du procédé de modulation de largeur d'impulsion, une grandeur de réglage d'harmoniques est déterminée aussi bien pour un processus de mise sous tension qu'une autre grandeur de réglage d'harmoniques pour un processus de mise hors tension,

après quoi, deux grandeurs de réglage d'harmoniques sont calculées par période du procédé de modulation de largeur d'impulsion, à savoir une grandeur de réglage d'harmoniques pour le temps de commutation du processus de mise sous tension et une autre grandeur de réglage d'harmoniques pour le temps de commutation du processus de mise hors tension.

2. Procédé selon la revendication 1, comprenant en outre les étapes consistant à :

déterminer une grandeur de rétroaction d'harmoniques qui comprend une grandeur réelle de l'harmonique qui se produit lorsque la machine électrique (2) est alimentée ; et

déterminer un écart de régulation d'harmoniques en utilisant la grandeur de rétroaction d'harmoniques déterminée et une grandeur de référence prédéfinie par rapport à l'harmonique,

une grandeur de réglage d'harmoniques étant déterminée en utilisant l'écart de régulation d'harmoniques déterminé.

3. Procédé selon la revendication 2,

dans lequel la grandeur de rétroaction d'harmoniques comprend la grandeur réelle de l'harmonique dans un système orienté champ ;

la grandeur de rétroaction d'harmoniques étant transformée en une grandeur de rétroaction continue d'harmoniques dans un système orienté harmonique ; et

l'écart de régulation d'harmoniques étant déterminé comme étant une différence entre la grandeur de rétroaction continue d'harmoniques et la grandeur de référence prédéfinie.

4. Procédé selon la revendication 3, dans lequel, pour déterminer une grandeur de réglage d'harmoniques en utilisant l'écart de régulation d'harmoniques déterminé, une grandeur de réglage continue d'harmoniques est déterminée dans le système orienté harmonique et dans lequel la grandeur de réglage continue d'harmoniques est retransformée en la grandeur de réglage d'harmoniques dans le système orienté champ.

5. Procédé selon l'une des revendications précédentes, dans lequel une grandeur de réglage d'onde fondamentale est en outre déterminée au moyen d'une régulation d'onde fondamentale, une grandeur de réglage de machine étant déterminée par superposition de la grandeur de réglage d'harmoniques à la grandeur de réglage d'onde fondamentale, et l'alimentation de la machine électrique (2) s'effectuant en utilisant la grandeur de réglage de machine déterminée.

6. Dispositif (1) pour le fonctionnement d'une machine électrique (2), comprenant :

un dispositif de calcul (11) configuré pour déterminer une grandeur de réglage d'harmoniques par rapport à un harmonique d'une fréquence prédéfinie qui se produit lorsque la machine électrique (2) est alimentée ; et

un dispositif de commande (12) configuré pour alimenter la machine électrique (2) en utilisant la grandeur de réglage d'harmoniques déterminée au moyen d'un procédé de modulation de largeur d'impulsion ;

**caractérisé en ce que** le dispositif (1) est configuré pour déterminer, pour chaque période du procédé de modulation de largeur d'impulsion, une grandeur de réglage d'harmoniques aussi bien pour un processus de mise sous tension qu'une autre grandeur de réglage d'harmoniques pour un processus de mise hors tension,

après quoi, deux grandeurs de réglage d'harmoniques sont calculées par période du procédé de modulation de largeur d'impulsion, à savoir une grandeur de réglage d'harmoniques pour le temps de commutation du processus de mise sous tension et une autre grandeur de réglage d'harmoniques pour le temps de commutation du processus de mise hors tension.

7. Dispositif (1) selon la revendication 6, dans lequel le dispositif de calcul (11) est en outre configuré pour

- déterminer une grandeur de rétroaction d'harmoniques qui comprend une grandeur réelle de l'harmonique qui se produit lorsque la machine électrique (2) est alimentée ;

- déterminer un écart de régulation d'harmoniques en utilisant la grandeur de rétroaction d'harmoniques déterminée et une grandeur de référence prédéfinie par rapport à l'harmonique ; et
- déterminer une grandeur de réglage d'harmoniques en utilisant l'écart de régulation d'harmoniques déterminé.

8. Dispositif (1) selon la revendication 7, dans lequel la grandeur de rétroaction d'harmoniques comprend la grandeur réelle de l'harmonique dans un système orienté champ ; et
le dispositif de calcul (11) étant en outre configuré pour

- transformer la grandeur de rétroaction d'harmoniques en une grandeur de rétroaction continue d'harmoniques dans un système orienté harmonique, et
- déterminer l'écart de régulation d'harmoniques comme étant une différence entre la grandeur de rétroaction continue d'harmoniques et la grandeur de référence prédéfinie.

9. Produit de programme de calcul (P) comprenant un code de programme exécutable (PC), configuré pour mettre en œuvre le procédé selon l'une des revendications 1 à 5 lorsqu'il est exécuté sur un ordinateur.

10. Support de stockage (M) non volatil lisible par ordinateur comprenant un code de programme exécutable (MC), configuré pour mettre en œuvre le procédé selon l'une des revendications 1 à 5 lorsqu'il est exécuté sur un ordinateur.

**FIG. 1**

**FIG. 2**

**FIG. 3**

**FIG. 4**

P

PC

**FIG. 5**

M

MC

**FIG. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014265961 A1
- CN 109347387 B
- DE 102011003352 A1

**In der Beschreibung aufgeführte Nicht-Patentliteratur**

- **PANDIT et al.** *PR controller implementation using double update mode digital PWM for grid connected inverter*, 2014